# EUROPEAN PATENT SPECIFICATION

(11) **EP 4 105 140 B1**
(45) Date of publication and mention of the grant of the patent: **14.05.2025**
(21) Application number: 21754658.9
(22) Date of filing: 12.02.2021
(51) Int. Cl.: B65D 65/46, C11D 17/04, C08K 5/053, C08L 29/04, C11D 3/04, C08K 3/30

(54) **WATER-SOLUBLE FILM FOR LIQUID DETERGENT-PACKAGING CAPSULE**
WASSERLÖSLICHER FILM FÜR EINE FLÜSSIGWASCHMITTELKAPSEL
FILM SOLUBLE DANS L'EAU POUR CAPSULE DE CONDITIONNEMENT DE DÉTERGENT LIQUIDE

(30) Priority: 14.02.2020 JP 2020023866
(43) Date of publication of application: 21.12.2022
(73) Proprietor: Aicello Corporation, Toyohashi-shi, Aichi 441-1115 (JP)
(72) Inventor: TANIKAWA, Atsushi, Toyohashi-shi, Aichi 441-1115 (JP); GOTO, Rei, Toyohashi-shi, Aichi 441-1115 (JP)
(74) Representative: dompatent von Kreisler Selting Werner - Partnerschaft von Patent- und Rechtsanwälten mbB
(86) International application number: PCT/JP2021/005242
(87) International publication number: WO 2021/162087

(56) References cited:
- WO-A1-2006/035608
- WO-A1-2016/061026
- WO-A1-2016/160116
- CN-A- 107 936 431
- JP-A- 2015 038 227
- JP-A- 2019 119 877
- JP-A- 2019 189 706

## Description

### Technical Field

The present invention relates to a water-soluble film for a liquid detergent-packaging capsule used as a packaging capsule in which a liquid detergent is enclosed.

### Background of the Art

Polyvinyl alcohol resins are conveniently used as a water-soluble film for forming a one-dose-packaging capsule in which a liquid detergent is enclosed, which is loaded for washing. However, this water-soluble film has some problem to cause discoloration: yellowing during its film-formation or due to heating during its drawing-processing like vacuum-molding followed by filling with a liquid detergent and then molding the packaging capsule; deterioration and discoloration over time during storage due to long-term contact with components of a liquid detergent enclosed. And hence, to prevent such discoloration, especially discoloration due to heating, it is known that a sulfite as an anti-oxidant is added to the water-soluble film.

The water-soluble film may cause whitening due to a bleed-out phenomenon that a sulfite in the water-soluble film deposits from the surface of the water-soluble film over time.

To prevent discoloration and the bleed-out phenomenon of the water-soluble film Patent document 1 discloses that the water-soluble film comprises a polyvinyl alcohol-type resin, at least two types of plasticizers, for example, glycerin, diglycerin and/or trimethylolpropane, and a sulfite, wherein, the plasticizers are contained in 5-50 parts by weight with respect to 100 parts by weight of the polyvinyl alcohol-type resin, and the weight ratio of the sulfite to the plasticizer is greater than 0.02 and 0.35 or less. WO 2016/160116 A1 discloses a water-soluble film including a polyvinyl alcohol copolymer resin, a plasticizer, an anti- block filler, and a release modifier.

The sulfite is used not only as an anti-oxidant for the water-soluble film, but also as a stabilizer for the liquid detergent to be enclosed. As the stabilizer, the sulfite as well as the sulfate may also be used. Inorganic salts such as the sulfites and the sulfates in the liquid detergent are dissolved or dispersed, but in some cases water and solvent contained in the liquid detergent may gradually penetrate into the water-soluble film as a carrier, resulting in their precipitate on the surface of the water-soluble film over time in a similar manner like the sulfite which is pre-contained in the water-soluble film as an anti-oxidant. These have a problem of causing the film whitening due to the bleed-out phenomenon through precipitate.

Therefore, it is required to prevent not only precipitate of the sulfite contained in the water-soluble film as the anti-oxidant, but also precipitate of the inorganic salts contained in the enclosed liquid detergent on the film surface, and further to suppress whitening caused by these bleed-out phenomena.

**In** recent years, in addition, a liquid detergent-packaging capsule in which a liquid detergent for a single use is enclosed is widely used for a capsule made of the water-soluble film with mold-processing such as deep-drawing for cleaning laundry, dishes, etc. And even if an infant accidentally mouths the capsule, it does not cause severe effects from high-concentration detergent swallowing, and hence dilution of liquid detergents is being advanced based on safety regulations.

The liquid detergent is diluted by increasing its amount using water as a solvent, dispersant, stabilizer, etc. The compound which can be used as a dispersant and stabilizer may also be used as the plasticizer contained in the water-soluble film for liquid detergent-packaging capsule in which the liquid detergent is enclosed. When the liquid detergent containing a large amount of such solvent and plasticizer is enclosed, softening of the water-soluble film for the packaging capsule and swelling of the packaging capsule by absorbing them are caused. Thus, once softening and swelling of the packaging capsule happened, the packaging capsule has expanded, and its haptics (tension) has been diminished, and then the appearance of the liquid detergent-packaging capsule is worse.

In addition, once softening and swelling of the packaging capsule happened, its gas-barrier property is reduced, and then the liquid detergent-packaging capsule is susceptible to humidity and temperature in its storage circumstance. If its gas-barrier property is reduced, and its storage circumstance is more sensitive, for example, under low humidity circumstances, as the amount of water volatilization in the packaging capsule increases, the solvent in which inorganic salts such as sulfites and sulfates are dissolved decreases, and then the bleed-out phenomenon that their precipitate on the surface of the packaging capsule occurs, making it easy to cause whitening.

Thus, it is desired to obtain a water-soluble film for a liquid detergent-packaging capsule which is useful for a liquid detergent-packaging capsule having following characteristics: it can prevent the bleed-out phenomenon that sulfites containing in the water-soluble film for packaging capsule in which the liquid detergent is enclosed or inorganic salts containing in the liquid detergent to be enclosed are deposited on the film surface; it can suppress whitening thereby; it can maintain the haptics of the packaging capsule enclosing the liquid detergent; it may be possible to keep a good appearance thereof.

### [Prior Art Document]

### [Patent Document]

[Patent Document 1]Japanese Patent Application Publication No.2005-179390A1

### Summary of the Invention

### Problems to be Solved by the Invention

The present invention is made to solve the problems, and its object is to provide a water-soluble film that is for a liquid detergent-packaging capsule and that does not cause discoloration such as yellowing due to heating and coloring due to contact with a liquid detergent to be enclosed, and can prevent precipitate of inorganic salts such as sulfites and sulfates contained in the packaging capsule or the liquid detergent, and prevent whitening due to such precipitate, and can maintain the haptics of the packaging capsule enclosing the liquid detergent and hence keep a good appearance thereof over time.

### Means for Solving Problems

The present invention is made to solve the problems. A water-soluble film for a liquid detergent-packaging capsule of the present invention is a water-soluble film for a liquid detergent-packaging capsule, that is a water-soluble film for a packaging capsule in which a liquid detergent is sealed, containing: an anionic-group modified polyvinyl alcohol resin, a plasticizer including glycerin and sorbitol at a mass ratio of 1 : 2.1 to 5.3, and a sulfite, the total contained amount of the glycerin and the sorbitol is 21-39 parts by mass, and the contained amount of the sulfite is 0.1-1.9 parts by mass, with respect to 100 parts by mass of the anionic-group modified polyvinyl alcohol resin.

In the water-soluble film for liquid detergent-packaging capsule, the sulfite is favorably sodium sulfite.

In the water-soluble film for liquid detergent-packaging capsule, the anionic-group modified polyvinyl alcohol resin may contain a maleic acid-modified polyvinyl alcohol.

In the water-soluble film for liquid detergent-packaging capsule the liquid detergent may contain at least any one of sulfites, sulfates, and other inorganic salts.

The water-soluble film for liquid detergent-packaging capsule has favorably a rate of yellowing after storage for 2 days at 90 °C being 1.5 at maximum.

The water-soluble film for liquid detergent-packaging capsule has favorably a haze value after storage for 2 weeks at 23 °C under 33% RH circumstance being 10.0% at maximum.

The water-soluble film for liquid detergent-packaging capsule has favorably an adhesion strength after storage for 2 days at 23 °C under 50% RH circumstance being 200 gf at maximum

For the water-soluble film for liquid detergent-packaging capsule, the difference between a haze value on film portions around the perimeter edge of the liquid detergent-packaging capsule whose limbuses of sheet-pieces of the water-soluble film for liquid detergent-packaging capsule are sealed each other and another haze value on film portions around the perimeter edge of the liquid detergent-packaging capsule after storage for 3 days at 45 °C after sealing a liquid detergent in a hollow formed in between the sheet-pieces by sealing is favorably 15.0 % at maximum.

When the water-soluble film for liquid detergent-packaging capsule is used for a liquid detergent-packaging capsule in which a liquid detergent was enclosed, the capsule height retention rate (%) that is determined as the post-storage height relative to the initial height is favorably at least 90%, but here the post-storage height is the height after storage for 1 week at 23 °C under 50% RH circumstance and the initial height is the height before storage.

### Effects of the Invention

Since the water-soluble film for the liquid detergent-packaging capsule of the present invention contains the plasticizer containing glycerin and sorbitol at the specific mass ratio, with respect to a specific amount of the anionic-group modified polyvinyl alcohol resin content, it does not cause precipitate of the sulfite to prevent discoloration and the inorganic salt contained in a liquid detergent on the film surface and whitening due to such precipitate, and thus this can be used for the packaging capsule in which the liquid detergent is enclosed.

In addition, since the water-soluble film for liquid detergent-packaging capsule contains the sulfite in the packaging capsule when the packaging capsule is formed while enclosing the liquid detergent, it can prevent discoloration such as yellowing by heating. When the water-soluble film for liquid detergent-packaging capsule is transformed to the packaging capsule while enclosing the liquid detergent, the water contained in the liquid detergent acts as a carrier, and is transferred over time so that this and the sulfite contained in the liquid detergent are absorbed and incorporated into the packaging capsule, and thus some of the sulfite contained in the liquid detergent can be absorbed and used for uptake. Even if the water-soluble film for liquid detergent-packaging capsule contains the sulfite beforehand or to be moved in the aftermath as described above, in a similar manner it can exhibit anti-discoloration effects. Accordingly, the sulfite content contained beforehand in the water-soluble film for liquid detergent-packaging capsule is not only being suppressed, but also it can exhibit sufficient anti-discoloration effect.

Furthermore, until now, when a component such as glycerin that can be a plasticizer contained in the packaging capsule was used in the liquid detergent, this acted as a carrier, similar to the above water, and the sulfite was absorbed in the packaging capsule over time, resulting in that the amount of the transfer of the sulfite from the liquid detergent to the packaging capsule was easy to get a large amount. However, when the water-soluble film for liquid detergent-packaging capsule of the present invention is transformed to the packaging capsule while enclosing the liquid detergent, it cannot only suppress the absorption of such a component together with the sulfite, but the amount of the transfer of the sulfite from the liquid detergent to the packaging capsule can also be reduced by controlling it. Accordingly, it cannot only contain the enough amount of the sulfite to prevent discoloration of the packaging capsule, but it can also prevent the increase of precipitate of the sulfite on the surface of the packaging capsule over time. Furthermore, since in addition to the sulfite other inorganic salts contained in the liquid detergent can be suppressed from being incorporated into the packaging capsule, it can also prevent the bleed-out phenomenon that they deposit on the surface of the packaging capsule.

Since the water-soluble film for liquid detergent-packaging capsule can enclose the liquid detergent containing a large amount of the solvents as the packaging capsule. And further, even if the liquid detergent was enclosed, it can suppress the absorption and transfer of the plasticizer that also acts as a compound to cause swelling the packaging capsule, it can prevent the reduction of haptics of the packaging capsule due to its swelling and extension, and can be used as the liquid detergent-packaging capsule to keep a good appearance thereof over time.

The water-soluble film for liquid detergent-packaging capsule is useful as the liquid detergent-packaging capsule from the following viewpoints: it does not cause discoloration such as yellowing due to heating and coloring by the liquid detergent to be enclosed; it can prevent bleed-out caused by precipitate of the sulfite to prevent discoloration and the inorganic salts contained in the liquid detergent on the surface of the packaging capsule, and resulting whitening; it can prevent the storage circumstance from being susceptible to temperature and humidity due to the reduction of the gas-barrier property through swelling of the packaging capsule; it can maintain the haptics and keep a good appearance thereof over time.

### Mode for Carrying out the Invention

The following details embodiments for carrying out the present invention, but the scope of the present invention is not limited to these embodiments.

A water-soluble film for a liquid detergent-packaging capsule of the present invention is used for a packaging capsule in which a liquid detergent is enclosed, and contains at least an anionic-group modified polyvinyl alcohol resin, a plasticizer containing glycerin and sorbitol at a mass ratio of 1:2.1-5.3, and a sulfite, and is characterized in that the plasticizer content is 21-39 parts by mass, and the amount of the sulfite content is 0.1-1.9 parts by mass, with respect to 100 parts by mass of the anionic-group modified polyvinyl alcohol resin.

The plasticizer contained in the water-soluble film for liquid detergent-packaging capsule is composed of glycerin and sorbitol favorably at a mass ratio of 1 : 2.1-5.3, more favorably 1 : 2.5-5.0, and most favorably 1 : 2.5-4.0. Glycerin and sorbitol can provide reasonable flexibility for the water-soluble film for liquid detergent-packaging capsule, and also make it easy to apply vacuum molding (thermo-foam) and other processing when making the liquid detergent-packaging capsule. If the plasticizer contains more glycerin than sorbitol, stickiness becomes stronger and the adhesion property of the water-soluble film for liquid detergent-packaging capsule is increased, and moreover it makes easy to cause bleed-out and resulting whitening due to precipitate of the sulfite and the inorganic salts contained in the liquid detergent on the surface of the packaging capsule. If the adhesion property is too high, for example, when the water-soluble film for liquid detergent-packaging capsule is rolled around during film-formation, making it difficult to handle because of stickiness of the film. If sorbitol is contained at a mass ratio beyond the above range, sorbitol deposits on the surface of the water-soluble film for liquid detergent-packaging capsule due to too much sorbitol.

The plasticizer may be composed of glycerin and sorbitol, and also may be composed of other plasticizers shown below in combination with glycerin and sorbitol.

As the plasticizer other than glycerin and sorbitol, for example, it may be diglycerin, polyglycerol, ethylene glycol, diethylene glycol, triethylene glycol, tetraethylene glycol, trimethylolpropane, propylene glycol, dipropylene glycol, polypropylene glycol, polyethylene glycol, 1,3-butanediol, 1,4-butanediol, 2,3-butanediol, 1,6-hexanediol, 2-methyl-1,3-propanediol, erythritol, xylitol, mannitol, glucose, fructose, maltitol, lactose, triethanolamine, triethanolamine acetate, ethanol acetamide, bisphenol A, bisphenol S, N-methylpyrrolidone, pentaerythritol, and the addition compounds of ethylene oxide with polyvalent alcohols such as glycerin, pentaerythritol, and sorbitol. If the plasticizer other than glycerin and sorbitol is contained, a total amount of all plasticizers can be up to 60 parts by mass, with respect to 100 parts by mass of the anionic-group modified polyvinyl alcohol resin.

A total amount by mass of glycerin and sorbitol is favorably 21-39 parts by mass, more favorably 25-35 parts by mass, and most favorably 28-35 parts by mass, with respect to 100 parts by mass of the anionic-group modified polyvinyl alcohol resin. Since the plasticizer containing glycerin and sorbitol is contained at a specific mass ratio within the above range for the anionic-group modified polyvinyl alcohol resin content, when the water-soluble film for liquid detergent-packaging capsule is used as the packaging capsule, to some extent it can be suppressed the potential plasticizer components which are contained in the liquid detergent enclosed in it from entering into the film of the packaging capsule. Accordingly, it can prevent the packaging capsule from absorbing and swelling. In contrast, the sulfite contained in the liquid detergent is absorbed reasonably and incorporated into the film of the packaging capsule.

In addition, although it depends on the types and quantities of the components contained in the liquid detergent to be enclosed, when the liquid detergent contains, for example, glycerin as a potential plasticizer, movement to reach equilibrium occurs between the plasticizer contained in the packaging capsule and the component that can work as the plasticizer toward the packaging capsule contained in the liquid detergent.

When the amount of glycerin contained in the liquid detergent is greater than the amount of glycerin contained in the water-soluble film for liquid detergent-packaging capsule, some of the glycerin contained in the liquid detergent is transferred to the film of the packaging capsule and absorbed in the film. On the other hand, some of sorbitol as the plasticizer contained in the packaging capsule is transferred from the film to the liquid detergent and released. At this point, the glycerin acts as a carrier that transfers the sulfite and inorganic salts in the liquid detergent to the film side, and the sorbitol can act as a carrier that transfers the sulfite and inorganic salts in the film to the liquid detergent side. Thus, because of the fact that there are more sorbitol in the film than glycerin, it can prevent the amounts of the sulfite and inorganic salts in the film from increasing enough to deposit over time, wherein the sorbitol releases more sulfite and inorganic salts in the film to the liquid detergent side. Accordingly, it can suppress precipitate of the sulfite and inorganic salts on the film surface when the liquid detergent is enclosed.

Although it has been shown the concrete examples of how glycerin is transferred to the film side and how sorbitol is transferred to the liquid detergent side, not limited to this, when the amount of the glycerin contained in the liquid detergent is less than the amount of the glycerin contained in the water-soluble film for liquid detergent-packaging capsule, the glycerin in the film acts as a carrier that transfers the sulfite and inorganic salts to the detergent side. Accordingly, although it depends on the types and amounts of the components contained in the liquid detergent, the plasticizers, especially glycerin and sorbitol, are transferred between the packaging capsule and the liquid detergent, respectively, and it can suppress precipitate of the sulfite and inorganic salts by releasing and/or absorbing the sulfite and inorganic salts contained in those substances.

The sulfite contained in the water-soluble film for liquid detergent-packaging capsule is favorably 0.1-1.9 parts by mass and more favorably 0.5-1.5 parts by mass, with respect to 100 parts by mass of the anionic-group modified polyvinyl alcohol resin. If the sulfite content exceeds 1.9 parts by mass, it makes it easier for the sulfite to deposit on the surface of the water-soluble film for liquid detergent-packaging capsule and the packaging capsule enclosing the liquid detergent. And it is desirable that the sulfite content in the water-soluble film for liquid detergent-packaging capsule is 0.1-1.3 mass%. The sulfite can prevent discoloration such as yellowing and coloring of the water-soluble film for liquid detergent-packaging capsule and the packaging capsule enclosing the liquid detergent.

As the sulfite, for example, it may be sodium sulfite, potassium sulfite, calcium sulfite, and ammonium sulfite. In particular, the sulfite is favorably sodium sulfite. These sulfites can be used alone or with mixes. In addition, the sulfite contained in the water-soluble film for liquid detergent-packaging capsule may be identical to or different from the sulfite contained in the liquid detergent to be enclosed.

The water-soluble film for liquid detergent-packaging capsule may contain the anionic-group modified polyvinyl alcohol resin as a film-constitution resin.

The anionic-group modified polyvinyl alcohol resin is favorably an anionic-group modified polyvinyl alcohol copolymer, more favorably a carboxylic acid-modified polyvinyl alcohol copolymer with carboxyl groups, and most favorably a maleic acid-modified polyvinyl alcohol copolymer.

The anionic-group modified polyvinyl alcohol resin, for example, may be a carboxylic acid-modified polyvinyl alcohol that has been saponified from the copolymer obtained by copolymerization of an unsaturated carboxylic acid with a vinyl ester compound as an anionic comonomer, and also may be an esterification product of some of the hydroxyl groups in a polyvinyl alcohol or a vinyl alcohol copolymer with an acid anhydride.

As a vinyl ester compound, for example, it may be vinyl acetate, vinyl formate, vinyl trifluoroacetate, vinyl propionate, vinyl butyrate, vinyl caprylate, vinyl laurylate, vinyl versaticate, vinyl palmitate, vinyl stearate, or the like. These can be used alone or in combination.

As the anionic comonomer, for example, it may be maleic acid, itaconic acid, fumaric acid, crotonic acid, acrylic acid, metacrylic acid, vinylsulfonic acid, and 2-acrlamide-2-methylpropanesulfonic acid, and their corresponding anhydrides or their corresponding esters, or the like.

The anionic-group modified polyvinyl alcohol resin may contain the repeating unit of the unsaturated carboxylic acid as well as a repeating unit of another monomer. As another monomer, for example, it may be olefins such as ethylene, propylene, isobutylene, α-octene, α-dodecene, α-octadecene, or the like; nitriles such as acrylonitrile, metacrylonitrile, or the like; amides such as acrylamide, metacrylamide, or the like; alkyl vinyl ethers; dimethylallyl vinyl ketone; N-vinylpyrrolidone; vinyl chloride, vinylidene chloride; polyoxyalkylene (meta)allyl ethers such as polyoxyethylene (meta)allyl ether, polyoxypropylene (meta)allyl ether, or the like; polyoxyalkylene (meta)acrylates such as polyoxyethylene (meta)acrylate, polyoxypropylene (meta)acrylate, or the like; polyoxyalkylene (meta)acrylamides such as polyoxyethylene (meta)acrylamide, polyoxypropylene (meta)acrylamide, or the like; polyoxymethylene(1-(meth)acrylamido-1,1-dimethylpropyl)ester; polyoxyalkylene vinyl ethers such as polyoxyethylene vinyl ether, polyoxypropylene vinyl ether, or the like; polyoxyalkylene allylamines such as polyoxyethylene allylamine, polyoxypropylene allylamine, or the like; polyoxyalkylene vinylamines such as polyoxyethylene vinylamine, polyoxypropylene vinylamine, or the like; diacrylacetoneamide, or the like.

Furthermore, it may be cationic-group containing monomers such as N-acrylamide methyltrimethylammonium chloride, N-acrylamide ethyltrimethylammonium chloride, N-acrylamide propyltrimethylammonium chloride, 2-acryloxyethyltrimethylammonium chloride, 2-metacryloxyethyltrimethylammonium chloride, 2-hydroxy-3-metacryloyloxypropylltrimethylammonium chloride, allyltrimethylammonium chloride, metallyltrimethylammonium chloride, 3-butenetrimethylammonium chloride, dimethyldiallylammonium chloride, diethyldiallylammonium chloride, or the like.

Another types of these monomers can be used alone or in combination. And these monomers may be contained to the extent that they do not interfere with the purpose of the present invention: for example, it may contain 0.01-10 mol%.

The anionic-group modified polyvinyl alcohol resin has a degree of polymerization being favorably 700 or more, more favorably 900 or more, and most favorably 1200 or more. If the degree of polymerization is less than 700, it makes it easier to reduce the mechanical physical property of the water-soluble film for liquid detergent-packaging capsule. The degree of polymerization is favorably up to 2500, more favorably 2200 or less, and most favorably 2000 or less. If the degree of polymerization is higher than 2500, it makes it easier to reduce the water solubility of the water-soluble film for liquid detergent-packaging capsule. The anionic-group modified polyvinyl alcohol resin has a degree of saponification thereof being favorably set from 70 mol% or more to 100 mol% or less, more favorably from 80 mol% or more to 99 mol% or less, and most favorably from 87 mol% or more to 98 mol% or less. If the degree of saponification thereof is lower than 70 mol%, the water solubility is likely to be reduced. The degree of saponification thereof is measured in accordance with JIS K6726 (1994).

The viscosity of 4 mass% of an aqueous solution of the anionic-group modified polyvinyl alcohol resin at 20 °C is not particularly limited, but is favorably to be 7.0-50 mPa•s, more favorably to be 9.0-40 mPa•s, and most favorably to be 12-35 mPa•s. The viscosity of 4 mass% of the aqueous solution is measured in accordance with JIS K6726 (1994).

The degree of modification of the anionic-group modified polyvinyl alcohol resin is favorably 0.1-10 mol %, more favorably 0.5-8.0 mol%, and most favorably 1-6 mol%. If the degree of modification of the anionic-group modified polyvinyl alcohol resin is less than 0.1 mol%, the solubility in water will be reduced, and in contrast if it is greater than 10 mol%, the productivity of the resin will be reduced.

As the water-soluble film for liquid detergent-packaging capsule the multiple types of the anionic-group modified polyvinyl alcohol resin can be used. In this case, the anionic-group modified polyvinyl alcohol can be used with one or more different molecular weight, degree of polymerization thereof, viscosity, degree of saponification thereof, degree of modification thereof, modified species, etc.

If necessary, the water-soluble film for liquid detergent-packaging capsule may contain additionally un-modified polyvinyl alcohols, other water-soluble polymers, surfactants, and additives, to the extent that they do not diminish its physical property.

As a water-soluble polymer, for example, it may be sodium polyacrylate, polyethylene oxide, polyvinylpyrrolidone, dextrin, chitosan, chitin, methylcellulose, hydroxyethylcellulose, or the like.

As the surfactant, for example, it may be a non-anionic surfactant, an anionic surfactant, a cationic surfactant, an amphoteric ion surfactant, or the like. The surfactant is particular favorable for sodium polyoxyethylene laurylether acetates and polyoxyethylene secondary alkyletherphosphate metal salts. These can be used alone or in combination. It is desirable that the surfactant content is 0.17-0.60 parts by mass, with respect to 100 parts by mass of the polyvinyl alcohol resin. The surfactant can be used to provide releasability from a cast surface during the production of the water-soluble film, and also to facilitate the processing of seals (water-applied seals, heat seals) for producing the liquid detergent-packaging capsule.

As the additive, for example, it may be a filler, a colorant, a flavoring agent, an extender, a defoamer, a release agent, an ultraviolet absorber, an anti-rust, liquid paraffins, an optical brightener, a chelating agent, an aversive agent such as denatonium benzoate, fatty acid-related materials, inorganic powder, or the like.

The water-soluble film for liquid detergent-packaging capsule is film-formed by using the composition for the water-soluble film prepared by blending and mixing together a specified amount of the anionic-group modified polyvinyl alcohol resin, the plasticizer containing glycerin and sorbitol, the sulfite, and, if necessary, the surfactant and water by means of publicly known methods such as a solution casting method, a moisture extrusion method, and a melt extrusion method. In addition, the composition for the water-soluble film, if necessary, may contain a water-soluble polymer and additives as indicated above.

The water content of the water-soluble film for liquid detergent-packaging capsule is favorably 5.5-8.0 mass%, and more favorably 6.0-7.0 mass%.

The thickness of the water-soluble film for liquid detergent-packaging capsule can be set as appropriate to a range of 20-100 µm. However, from the viewpoint to have a robust property that prevents leakage when the liquid detergent was enclosed, and robustness not to make a break in mold-processing, and to maintain the packaging capsule haptics, it is favorable to have a range of 25-95 µm, more favorably 30-90 µm, and most favorably 75-90 µm.

The water-soluble film for liquid detergent-packaging capsule has favorably a rate of yellowing being 1.5 at maximum, after storage for 2 days at 90 °C, by measurement in accordance with JIS Z8722 (2009). In addition, a haze value after storage for 2 weeks at 23 °C under 33% RH circumstance is favorably 10.0% at maximum by measurement in accordance with JIS K7136 (2000). Furthermore, after storage of the water-soluble film for liquid detergent-packaging capsule for 2 days at 23 °C under 50% RH circumstance, the water-soluble film for liquid detergent-packaging capsule was put on a glass plate with an aluminum foil and 3 kg of a glass plate; after 5 min, the glass plate and the aluminum foil on the top were removed, and the digital force gauge (Imada Co. Ltd.: DS2-50N) was hooked to a clip centered on one side of the water-soluble film for liquid detergent-packaging capsule and pull it vertically with the glass underneath; finally the maximum adhesion strength of the film was measured as it was removed from the glass plate underneath. Thus, it is favorable to have 200 gf at maximum

When the water-soluble film for liquid detergent-packaging capsule is molded in a capsule shape with hollow sections to enclose the liquid detergent through sealing the four sides of those two sheets, and used as the packaging capsule to enclose the liquid detergent, an initial haze value on film portions around the perimeter edge that span the perimeter of the liquid detergent-non-enclosing packaging capsule and a post-storage haze value on the film portions around the perimeter edge that span the perimeter of the liquid detergent-enclosing packaging capsule after being stored for 3 days at 45 °C by enclosing the liquid detergent are measured in accordance with JIS K7136 (2000) , respectively. It is favorable that the difference value between the post-storage haze value and the initial haze value is 15.0 % at maximum.

When the water-soluble film for liquid detergent-packaging capsule is used as a liquid detergent-enclosing capsule in which a liquid detergent is enclosed, the capsule height retention rate (%) obtained by dividing the post-storage height by the initial height and multiplying it by 100 is favorably to be at least 90%, and more favorably to be 95% or more, but here the post-storage height is the height of the liquid detergent-enclosing capsule after storage for 1 week at 23 °C under 50% RH circumstance, and the initial height is the height of the liquid detergent-enclosing capsule before storage.

In the water-soluble film for liquid detergent-packaging capsule of the present invention, some of the sulfite may be absorbed and incorporated, if the sulfite is contained in the liquid detergent enclosed as the packaging capsule.

By using the water-soluble film for liquid detergent-packaging capsule of the present invention, for example, the liquid detergent-packaging capsule can be produced as follows. The water-soluble film for liquid detergent-packaging capsule is drawn out from the water-soluble film roll for a bottom by using a deep-drawing packaging capsule manufacturing machine for vacuum molding. Onto the metal-mold having a cavity corresponding to the depression that can enclose the liquid detergent is introduced the water-soluble film for liquid detergent-packaging capsule as a water-soluble film for a bottom. The water-soluble film for the bottom is heated to 70-120 °C followed by closes to the multiple cavity openings, the cavity inside is evacuated by vacuum suction with a vacuum pump connected to the cavity, and then the water-soluble film for a bottom is drawn to a shape of the cavity to give a packaging capsule bottom sheet with a molded depression. To the depression of the packaging capsule bottom sheet is packed the prescribed amount of the liquid detergent. The water-soluble film for liquid detergent-packaging capsule is drawn out from a water-soluble film roll for a top, and, if necessary, after applying water the packaging capsule bottom sheet is covered together with the liquid detergent. Heat-sealing and/or press-sealing in the film portions around the perimeter edge corresponding to the perimeter of the depression make a seal in the film portions around the perimeter edge between the water-soluble film for liquid detergent-packaging capsule as the water-soluble film for the bottom and the water-soluble film for liquid detergent-packaging capsule as the water-soluble film for the top. Cutting the middle of the film portions around the perimeter edge gives an individually packaged deep-drawing packaging capsule.

In the liquid detergent-packaging capsule, some of the sulfite can be absorbed, incorporated and contained, when the sulfite is contained in the liquid detergent with the water-soluble film for liquid detergent-packaging capsule as the packaging capsule and the liquid detergent in its hollow. And hence, it can make difficult to cause yellowing and coloring with the liquid detergent by the sulfite contained beforehand in the water-soluble film for liquid detergent-packaging capsule as well as the sulfite moved from the liquid detergent in the aftermath, and therefore it seems to be possible to maintain a good appearance thereof over time. Although this mechanism is not always clear, it can be estimated as follows.

For the packaging capsule made of the water-soluble film for liquid detergent-packaging capsule and the liquid detergent to be enclosed, movement to reach equilibrium occurs between the plasticizer contained in the packaging capsule and the component that can be the plasticizer for the packaging capsule contained in the liquid detergent, and phenomenon that some of the water contained in the detergent is transferred over time to the packaging capsule occurs, when the water contained in the packaging capsule is volatile due to temperature and moisture effects by exposing to air. Because of the action of the water and the plasticizer as a carrier, some of the sulfite and other inorganic salts contained in the liquid detergent, along with the water and the plasticizer, are transferred to the packaging capsule for permeation and absorbed. However, the sulfite and other inorganic salts do not cause bleed-out depending on the types and quantities of the specific plasticizer in the water-soluble film, and they appear to remain incorporated in the water-soluble film. Accordingly, whether the sulfite is contained originally in the water-soluble film for liquid detergent-packaging capsule or the sulfite is contained by incorporation aftermath as described above, the packaging capsule made of the water-soluble film for liquid detergent-packaging capsule is likely to show similarly that the anti-oxidant effect can make discoloration difficult.

Since the liquid detergent-packaging capsule encloses the liquid detergent with the packaging capsule shown above, it does not cause discoloration over time during storage or cause whitening due to the bleed-out phenomenon, it is not susceptible to storage circumstance, and haptics can be maintained to keep a good appearance thereof over time.

The liquid detergent enclosed in the liquid detergent-packaging capsule is not particularly limited, but can be used the commercially available one and may contain at least any one of the followings selected from the sulfite, the sulfate, and other inorganic salts. These contents in the liquid detergent are not particularly limited, but it is favorable that the sulfate-type material contained in the water-soluble film for liquid detergent-packaging capsule (a sulfite, a hydrogen sulfite, a sulfate, or the like) and the sulfate-type material contained in the liquid detergent (a sulfite, a hydrogen sulfite, a sulfate, or the like) are combined to be 0.498-0.506 mass%, with respect to one piece of the liquid detergent-packaging capsule.

### Embodiments

The following details embodiments for carrying out the present invention, but the scope of the present invention is not limited to these embodiments.

A polyvinyl alcohol resin (PVA) used in each of Examples and Comparative examples is as follows.

A1: 4 mass% of the aqueous solution viscosity 28 mPa•s, a degree of polymerization 1700, an average degree of saponification 88 mol%, a degree of modification 1.9 mol%, maleic acid-modified polyvinyl alcohol.

A2: 4 mass% of the aqueous solution viscosity 28 mPa•s, a degree of polymerization 1700, an average degree of saponification 93 mol%, a degree of modification 1.9 mol%, maleic acid-modified polyvinyl alcohol.

A3: 4 mass% of the aqueous solution viscosity 29 mPa•s, a degree of polymerization 1700, an average degree of saponification 97 mol%, a degree of modification 1.9 mol%, maleic acid-modified polyvinyl alcohol.

A4: 4 mass% of the aqueous solution viscosity 29 mPa•s, a degree of polymerization 1700, an average degree of saponification 94 mol%, a degree of modification 3.6 mol%, maleic acid-modified polyvinyl alcohol.

A5: 4 mass% of the aqueous solution viscosity 25 mPa•s a degree of polymerization 1800, an average degree of saponification 88 mol%, non-modified polyvinyl alcohol.

### (Example 1)

### (Preparation of composition for water-soluble film)

The composition for a water-soluble film was prepared by mixing and blending 0.5 parts by mass of sodium sulfite as a sulfate-type material, 7 parts by mass of glycerin and 23 parts by mass of sorbitol as a plasticizer, 0.5 parts by mass of sodium polyoxyethylene lauryl ether acetate of an anionic surfactant as a surfactant, and water, with respect to 100 parts by mass of an anionic-group-modified polyvinyl alcohol with a partially hydrolyzed acetic acid vinyl ester•maleic acid comonomer as a polyvinyl alcohol resin (a viscosity of 4 mass% aqueous solution 28 mPa•s w, a degree of saponification 88 mol%, a degree of modification of maleic acid 1.9 mol%).

### (Preparation of water-soluble film for liquid detergent-packaging capsule)

The viscosity of the composition was approximately 3000 mPa•s by measurement with a type B viscometer at 85 °C. As a cast surface a metal roll was prepared, and its surface was cleaned by wiping with a cloth dampened with pure water. While the metal roll was heated to its surface temperature of about 80 °C, the composition for the water-soluble film was cast to the metal roll. The metal roll was dried for 8 minutes while rotating to give the water-soluble film for liquid detergent-packaging capsule at thickness of 75 µm.

### (Examples 2-11)

For Examples 2-11, each of the composition for the water-soluble film was prepared by mixing shown in Table 1. Each of the water-soluble film for liquid detergent-packaging capsule was prepared using each of the composition for the water-soluble film obtained in a similar manner as in Example 1.

### (Comparative examples 1-21)

For Comparative examples 1-21, each of the composition for the water-soluble film was prepared by mixing shown in Table 1. Each of the water-soluble film for liquid detergent-packaging capsule was prepared using each of the composition for the water-soluble film obtained in a similar manner as in Example 1.

**[Table1]**

| | Thickness | PVA resin | | Sulfate-type Substance | | | Plasticizer | | | | | | Surfactant |
|---|---|---|---|---|---|---|---|---|---|---|---|---|---|
| | | | | | | | Combination | | | | Total Amount | Sorbitol/Glycerin Mass-ratio | |
| | | | | | | | Glycerin | Sorbitol | Others | | | | |
| | µm | type | mass parts | substance | mass parts | mass% | mass parts | mass parts | substance | mass parts | mass parts | | mass parts |
| Example 1 | 75 | A1 | 100 | Sodium Sulfite | 0.5 | 0.4 | 7 | 23 | | | 30 | 3.3 | 0.5 |
| Example2 | 75 | A1 | 100 | Sodium Sulfite | 1.1 | 0.8 | 7 | 23 | | | 30 | 3.3 | 0.5 |
| Example3 | 75 | A1 | 100 | Sodium Sulfite | 1.5 | 1.1 | 7 | 23 | | | 30 | 3.3 | 0.5 |
| Example4 | 75 | A1 | 100 | Sodium Sulfite | 1.1 | 0.8 | 8 | 27 | | | 35 | 3.4 | 0.5 |
| Example5 | 75 | A1 | 100 | Sodium Sulfite | 1.1 | 0.8 | 6 | 19 | | | 25 | 3.2 | 0.5 |
| Example6 | 75 | A1 | 100 | Sodium Sulfite | 1.1 | 0.8 | 8 | 20 | | | 28 | 2.5 | 0.5 |
| Example7 | 75 | A1 | 100 | Sodium Sulfite | 1.1 | 0.8 | 5 | 25 | | | 30 | 5.0 | 0.5 |
| Example8 | 75 | A1 | 100 | Sodium Sulfite | 0.9 | 0.7 | 8 | 18 | | | 26 | 2.3 | 0.5 |
| Example9 | 75 | A2 | 100 | Sodium Sulfite | 1.1 | 0.8 | 8 | 20 | | | 28 | 2.5 | 0.5 |
| Example 10 | 75 | A3 | 100 | Sodium Sulfite | 1.1 | 0.8 | 8 | 20 | | | 28 | 2.5 | 0.5 |
| Example 11 | 75 | A4 | 100 | Sodium Sulfite | 1.1 | 0.8 | 8 | 20 | | | 28 | 2.5 | 0.5 |
| Comp.Ex.1 | 75 | A1 | 100 | Sodium Sulfite | 0 | 0 | 7 | 23 | | | 30 | 3.3 | 0.5 |
| Comp.Ex.2 | 75 | A1 | 100 | Sodium Sulfite | 2.0 | 1.4 | 7 | 23 | | | 30 | 3.3 | 0.5 |
| Comp.Ex.3 | 75 | A1 | 100 | Sodium Sulfite | 3.0 | 2.1 | 7 | 23 | | | 30 | 3.3 | 0.5 |
| Comp.Ex.4 | 75 | A1 | 100 | Sodium Sulfite | 1.1 | 0.7 | 12 | 38 | - | - | 50 | 3.2 | 0.5 |
| Comp.Ex.5 | 75 | A1 | 100 | Sodium Sulfite | 1.1 | 0.7 | 10 | 30 | | | 40 | 3.0 | 0.5 |
| Comp.Ex.6 | 75 | A1 | 100 | Sodium Sulfite | 1.1 | 0.8 | 5 | 15 | | | 20 | 3.0 | 0.5 |
| Comp.Ex.7 | 75 | A1 | 100 | Sodium Sulfite | 1.1 | 0.9 | 3 | 12 | | | 15 | 4.0 | 0.5 |
| Comp.Ex.8 | 75 | A1 | 100 | Sodium Sulfite | 1.1 | 0.8 | 30 | 0 | | | 30 | 0.0 | 0.5 |
| Comp.Ex.9 | 75 | A1 | 100 | Sodium Sulfite | 1.1 | 0.8 | 23 | 7 | | | 30 | 0.3 | 0.5 |
| Comp.Ex. 10 | 75 | A1 | 100 | Sodium Sulfite | 1.1 | 0.8 | 15 | 15 | | | 30 | 1.0 | 0.5 |
| Comp.Ex. 11 | 75 | A1 | 100 | Sodium Sulfite | 1.1 | 0.8 | 10 | 20 | | | 30 | 2.0 | 0.5 |
| Comp.Ex. 12 | 75 | A1 | 100 | Sodium Sulfite | 1.1 | 0.8 | 3 | 27 | | | 30 | 9.0 | 0.5 |
| Comp.Ex. 13 | 75 | A1 | 100 | Sodium Sulfite | 1.1 | 0.8 | 2 | 28 | | | 30 | 14.0 | 0.5 |
| Comp.Ex. 14 | 75 | A1 | 100 | Sodium Sulfite | 1.1 | 0.8 | 1 | 29 | | | 30 | 29.0 | 0.5 |
| Comp.Ex. 15 | 75 | A1 | 100 | Sodium Sulfite | 1.1 | 0.8 | 0 | 30 | | | 30 | - | 0.5 |
| Comp.Ex. 16 | 75 | A5 | 100 | Sodium Sulfite | 1.1 | 0.8 | 8 | 20 | | | 28 | 2.5 | 0.5 |
| Comp.Ex. 17 | 75 | A1 | 100 | Sodium Bisulfite | 1.1 | 0.8 | 7 | 23 | | | 30 | 3.3 | 0.5 |
| Comp.Ex. 18 | 75 | A1 | 100 | Sodium sulfate | 1.1 | 0.8 | 7 | 23 | | | 30 | 3.3 | 0.5 |
| Comp.Ex. 19 | 75 | A1 | 100 | Sodium Sulfite | 1.1 | 0.8 | - | 20 | Trimethylolpropane | 8 | 28 | - | 0.5 |
| Comp.Ex.20 | 75 | A1 | 100 | Sodium Sulfite | 1.1 | 0.8 | 8 | - | Mannitol | 20 | 28 | - | 0.5 |
| Comp.Ex.21 | 75 | A1 | 100 | Sodium Sulfite | 1.1 | 0.8 | 8 | - | Xylitol | 20 | 28 | - | 0.5 |

For the water-soluble film for liquid detergent-packaging capsule obtained in each of Examples and Comparative examples the evaluation test was performed as follows. The preferred range for each evaluation test is shown in Table 2 below as the evaluation criteria. In addition, the results of each evaluation test are summarized in Table 2 below.

### (Yellowing resistance evaluation test)

One piece of the water-soluble film for liquid detergent-packaging capsule obtained in each of Examples and Comparative examples was cut to 180 mm x 75 mm size, and stored under 90 °C circumstance for 2 days. After that, YI (a rate of yellowing) was measured with a Spectral colorimeter (Nippon Denshoku Industries Co., Ltd.: SD 7000) in accordance with JIS Z8722 (2009).

### (Bleed resistance evaluation test)

One piece of the water-soluble film for liquid detergent-packaging capsule obtained in each of Examples and Comparative examples was cut to 100 mm x 100 mm size, and stored at 23 °C under 33% RH circumstance for 2 weeks. After that, the haze was measured with a Haze Meter (Nippon Denshoku Industries Co., Ltd.: NDH 5000) in accordance with JIS K7136 (2000). By measuring the haze value, the bleed resistance of the component contained in the water-soluble film for liquid detergent-packaging capsule can be evaluated.

### (Adhesion property evaluation test)

One piece of the water-soluble film for liquid detergent-packaging capsule obtained in each of Examples and Comparative examples was cut to 330 mm x 330 mm size, and stored at 23 °C under 50% RH circumstance for 2 days. On a glass plate cleaned its surface using a lab towel (Unichemy Co., Ltd.) dampened with methanol was placed the air face of the water-soluble film for liquid detergent-packaging capsule in contact with it when it was cast. On the water-soluble film for liquid detergent-packaging capsule was placed one sheet of an aluminum foil, and 3 kg of a glass plate was further placed on the aluminum foil. After 5 min, the glass plate and the aluminum foil on the water-soluble film for liquid detergent-packaging capsule were removed, and the adhesion strength between the bottom glass plate and the water-soluble film for liquid detergent-packaging capsule was measured in accordance with the following procedure. Place a clip in the center of one side of the water-soluble film for liquid detergent-packaging capsule and hook the clip to the end of a Digital Force Gauge (Imada Co., Ltd.: DS2-50N). Pull the Digital force gauge vertically on the glass plate while holding the clip in place, and the maximum strength of the film when it was removed from the glass plate was measured.

### (Preparation of liquid detergent for clothes-washing)

As a liquid detergent for clothes-washing a total of 100 mass% detergent, which is composed of 37 mass% of a straight chain alkyl (C10-C15) benzenesulfonic acid, 5.5 mass% of monoethanolamine, 21 mass% of glycerin, 28 mass% of propylene glycol, 0.5 mass% of sodium sulfite, and 8 mass% of water, was prepared.

### (Precipitate and whitening evaluation test)

One piece of the water-soluble film for liquid detergent-packaging capsule obtained in each of Examples and Comparative examples was cut to 206 mm x 115 mm size, then its long edge was folded in half so that the air face was inside when it was cast, and two sides were heat-sealed to a width of 25 mm with a Heat Seal Tester (Tester Sangyo Co., Ltd.: TP-701B) to give a 103 mm x 115 mm-sized flat bag. At this point, the initial haze (H0) of the film portions around the perimeter edge, which is a seal part of the flat bag, was measured with a Haze Meter (Nippon Denshoku Industries Co., Ltd.: NDH 5000). To the flat bag was inserted about 17 mL of the liquid detergent for clothes-washing prepared, then the remaining one side was heat-sealed, and a packaging capsule enclosing the liquid detergent was prepared. The liquid detergent-packaging capsule was stored in a laminate bag of PET 15 µm/PE 50 µm under 45 °C circumstance for 3 days in a sealed condition. At this point, the post-storage haze (H1) of the film portions around the perimeter edge, which is a seal part of the liquid detergent-packaging capsule, was measured with a Haze Meter (Nippon Denshoku Industries Co., Ltd.: NDH 5000). The heat-sealing conditions are as follows. Each haze value was measured in accordance with JIS K7136 (2000).
Seal top: an aluminum sealing bar with Teflon coating (Teflon is a trademark) with a 10 mm width, 160 °C
Seal bottom: a rubber plate with Teflon taping (Teflon is a trademark), 30 °C
Sealing time: 1 second
Sealing pressure: 0.2 MPa

ΔPrecipitate haze (%) was determined as follows. ΔPrecipitate haze (%) = post-storage haze of seal part (H1) - initial haze of seal part (H0)

Due to transparency variation in each of the water-soluble films after heat-sealing and different initial haze values caused by bleed-out before storage, the difference between the haze values before and after storage was determined, and only precipitate and whitening that caused by enclosing the liquid detergent in each of the water-soluble films can be evaluated.

### (Capsule haptics retention test)

The water-soluble film for liquid detergent-packaging capsule obtained in each of Examples and Comparative examples was used for a bottom and set on a metal-mold with cavity (box-shaped cavity with rounded corners with an opening area 2000 mm² and a depth 15 mm) under tight conditions so as to avoid wrinkles and sagging. The water-soluble film for liquid detergent-packaging capsule was heated at about 90 °C for 5 seconds, and the water-soluble film for liquid detergent-packaging capsule was followed the cavity by vacuum molding to mold the water-soluble film sheets for liquid detergent-packaging capsule with depressions. To the depression of the water-soluble film sheets for liquid detergent-packaging capsule on the cavity was inserted 22 mL of the liquid detergent for clothes-washing prepared. Next, in the same way, to the water-soluble film for liquid detergent-packaging capsule obtained was used for a top and was applied with a lab towel (Unichemy Co., Ltd.) dampened with water to give a water-coating amount of 44-54 g/m². After the water-applied water-soluble film for a top was immediately press-pasted with the water-soluble film by using 1.5 kg of a metal roll at the edge of the depression of the bottom side and this was kept for 1 minute 30 seconds. Then vacuum suction was stopped, the capsule sheet was taken out from the cavity, and then cut off to give the liquid detergent-packaging capsule.

After the liquid detergent-packaging capsule was taken out from the cavity, this was allowed to stand under room temperature circumstance for about 7 minutes. At this point, the initial height (h0) of the liquid detergent-packaging capsule was measured with a Height Gauge (Mitutoyo Co., Ltd.: Absolute digimrtic heightgage). The liquid detergent-packaging capsule was further stored at 23 °C under 50% RH circumstance for one week. At this point, the post-storage height (h1) of the liquid detergent-packaging capsule was measured with a Height Gauge (Mitutoyo Co., Ltd.: Absolute digimrtic heightgage).

The height retention rate (%) of the capsule was determined as follows. Height retention rate (%) of capsule = post-storage height (hl)/initial height (h0) x 100

The capsule height retention rate was evaluated on 3 levels: "Excellent" for more than 95%, "Good" for 90% or more to 95% or less, and "Poor" for less than 90%, "Excellent" means that the capsule haptics is excellent and have a more consumer-preferred look

**[Table2]**

| | Water-soluble Film | | | Liquid Detergent-packing Capsule | | |
|---|---|---|---|---|---|---|
| | YI | Haze | Adhesion strength | Total Amount of Sulfide-type Substance in Film and Detergent | Precipitate and Whitening(ΔPrecipitate Haze) | Capsule Height Retention Rate |
| | - | % | gf/330mm | mass% | % | % |
| Criteria | ≥1.5 | ≥10.0% | ≥200gf | 0.498~0.506 | ≥15.0% | ≤90% |
| Example 1 | 1.3 | 6.3 | 180 | 0.498 | 3.0 | Excellent (96) |
| Example2 | 1.2 | 2.5 | 160 | 0.503 | 7.3 | Excellent (95) |
| Example3 | 0.5 | 2.4 | 160 | 0.506 | 15.0 | Excellent (95) |
| Example4 | 1.0 | 4.6 | 200 | 0.503 | 12.0 | Excellent (97) |
| Example5 | 1.1 | 0.8 | 130 | 0.503 | 13.9 | good (93) |
| Example6 | 1.2 | 0.8 | 180 | 0.503 | 1.8 | Excellent (97) |
| Example7 | 1.1 | 6.4 | 180 | 0.503 | 9.0 | Excellent (97) |
| Example8 | 1.2 | 1.0 | 180 | 0.502 | 1.0 | good (94) |
| Example9 | 0.8 | 2.5 | 140 | 0.503 | 6.8 | Excellent (103) |
| Example 10 | 0.9 | 7.7 | 150 | 0.503 | 13.1 | Excellent (105) |
| Example 11 | 1.5 | 5.4 | 160 | 0.503 | 9.2 | Excellent (103) |
| Comp.Ex.1 | 3.1 | 6.2 | 170 | 0.495 | 0.4 | Excellent (96) |
| Comp.Ex.2 | 0.3 | 1.9 | 150 | 0.509 | 34.0 | Excellent (95) |
| Comp.Ex.3 | 0.3 | 3.5 | 180 | 0.516 | 40.5 | Excellent (95) |
| Comp.Ex.4 | 1.0 | 53.5 | 250 | 0.502 | 10.1 | Excellent (107) |
| Comp.Ex.5 | 1.1 | 14.8 | 320 | 0.502 | 3.4 | Excellent (100) |
| Comp.Ex.6 | 1.2 | 0.6 | 120 | 0.503 | 39.1 | good (91) |
| Comp.Ex.7 | 1.2 | 0.5 | 100 | 0.504 | 23.3 | good (92) |
| Comp.Ex.8 | 1.0 | 0.6 | 220 | 0.503 | 33.7 | Excellent (96) |
| Comp.Ex.9 | 1.1 | 0.7 | 230 | 0.503 | 25.3 | Excellent (96) |
| Comp.Ex.10 | 1.2 | 0.7 | 290 | 0.503 | 31.2 | Excellent (98) |
| Comp.Ex.11 | 1.2 | 7.6 | 230 | 0.503 | 2.5 | Excellent (98) |
| Comp.Ex.12 | 1.1 | 14.3 | 180 | 0.503 | 7.8 | Excellent (99) |
| Comp.Ex.13 | 1.2 | 27.0 | 160 | 0.503 | 9.4 | Excellent (100) |
| Comp.Ex.14 | 1.1 | 32.5 | 160 | 0.503 | 38.4 | Excellent (101) |
| Comp.Ex.15 | 1.2 | 18.9 | 170 | 0.503 | 16.7 | Excellent (102) |
| Comp.Ex.16 | 0.3 | 22.7 | 260 | 0.503 | 29.8 | Excellent (98) |
| Comp.Ex.17 | 0.5 | 0.7 | 230 | 0.503 | 18.7 | Excellent (95) |
| Comp.Ex.18 | 2.8 | 58.9 | 280 | 0.503 | 20.1 | Excellent (95) |
| Comp.Ex.19 | 0.9 | 0.4 | 130 | 0.503 | 31.7 | good (93) |
| Comp.Ex.20 | 0.7 | 66.1 | 450 | 0.503 | 74.0 | good (94) |
| Comp.Ex.21 | 0.9 | 0.3 | 160 | 0.503 | 24.5 | Excellent (96) |

As shown in Table 2, Examples 1-11 met all criteria for evaluation, and it has been found that it had not only a yellowing resistance and bleed resistance, but also had a reasonable adhesion property, and further, even if the liquid detergent was enclosed, it could maintain the capsule haptics without causing precipitate and whitening and keep a good appearance thereof. On the other hand, in Comparative examples 1-21 it has been found that one of the evaluation tests did not meet the criteria and was insufficient.

Specifically, as shown in Examples 1-11, when the sulfite content was 0.1-1.9 parts by mass, with respect to 100 parts by mass of the anionic-group-modified polyvinyl alcohol resin, the criteria of YI of 1.5 or less, haze of 10.0% or less, the adhesion strength (gf/330 mm) of 200 gf or less, precipitate and whitening (Δprecipitate haze) of 15.0% or less, and the capsule height retention rate of 90% or more were met. In contrast, as shown in Comparative example 1, when the sulfite content fell below 0.1 parts by mass, YI was too large, and, as shown in Comparative examples 2-3, when the sulfite content exceeded 1.9 parts by mass, precipitate and whitening (Δprecipitate haze) were too high.

As shown in Examples 1-11, when the total content of glycerin and sorbitol was 21-39 parts by mass, with respect to 100 parts by mass of the anionic-group-modified polyvinyl alcohol resin, all evaluation items satisfied the criteria. In contrast, as shown in Comparative examples 4-5, when the total content of glycerin and sorbitol exceeded 39 parts by mass, haze and the adhesion strength were too high, and, as shown in Comparative examples 6-7, when the total content of glycerin and sorbitol fell below 21 parts by mass, precipitate and whitening (Δprecipitate haze) were too high. In addition, as shown in Comparative examples 8-15, even if the total content of glycerin and sorbitol was 21-39 parts by mass, the adhesion strength tended to be too high when the mass ratio fell below the range of 1:2.1-5.3, and the smaller the mass ratio, more precipitate and whitening (Δprecipitate haze) tended to be too high. On the other hand, when the mass ratio exceeded the range of 1:2.1-5.3, haze was too high, and more the mass ratio, more precipitate and whitening (Δprecipitate haze) tended to be too high.

As shown in Examples 1-11, even if the degree of modification of maleic acid in the anionic-group-modified polyvinyl alcohol resin, the average degree of saponification and the viscosity were varied, all evaluation items satisfied the criteria. In contrast, as shown in Comparative example 16, when the non-modified polyvinyl alcohol was used, haze and the adhesion strength were too high, and precipitate and whitening (Δprecipitate haze) were also too high.

As shown in Comparative examples 17-18, when sodium hydrogen sulfite and sodium sulfate were used in place of the sulfite, precipitate and whitening (Δprecipitate haze) were not only too high, but the adhesion strength was also too high, and, in addition, YI and haze were too high when sodium sulfate was used.

As shown in Comparative example 19, when sorbitol and trimethylolpropane were used without using glycerin, precipitate and whitening (Δprecipitate haze) were too high. And, as shown in Comparative example 20, when glycerin and mannitol were used without using sorbitol, precipitate and whitening (Δprecipitate haze) were not only too high, but haze and the adhesion strength were also too high. And, as shown in Comparative example 21, when glycerin and xylitol were used without using sorbitol, precipitate and whitening (Δprecipitate haze) were too high.

From the results shown in Examples 1-11 it can be concluded that the use of the prescribed amount of the components gave excellent YI, haze, the adhesion strength, precipitate and whitening (Δprecipitate haze), and the capsule height retention rate.

### Industrial Applicability

The water-soluble film for a liquid detergent-packaging capsule of the present invention can be used as a packaging capsule enclosing various kinds of liquid detergents for washing and cleaning. The liquid detergent-packaging capsule using the water-soluble film for a liquid detergent-packaging capsule can be used as a cleaning agent for business and home use.

## Claims

1. A water-soluble film for a liquid detergent-packaging capsule, that is a water-soluble film for a packaging capsule in which a liquid detergent is sealed, containing:
an anionic-group modified polyvinyl alcohol resin, a plasticizer including glycerin and sorbitol at a mass ratio of 1 : 2.1 to 5.3, and a sulfite,
the total contained amount of the glycerin and the sorbitol is 21-39 parts by mass, and the contained amount of the sulfite is 0.1-1.9 parts by mass, with respect to 100 parts by mass of the anionic-group modified polyvinyl alcohol resin.

2. The water-soluble film for liquid detergent-packaging capsule according to claim 1, wherein the sulfite is sodium sulfite.

3. The water-soluble film for liquid detergent-packaging capsule according to claim 1 or 2, wherein the anionic-group modified polyvinyl alcohol resin is a maleic acid-modified polyvinyl alcohol.

4. The water-soluble film for liquid detergent-packaging capsule according to any one of claims 1 to 3, wherein a haze value after storage for 2 weeks at 23 °C under 33% RH circumstance is 10.0 % at maximum.

## Patentansprüche

1. Wasserlösliche Folie für eine Flüssigwaschmittel-Verpackungskapsel, die eine wasserlösliche Folie für eine Verpackungskapsel ist, in der ein Flüssigwaschmittel versiegelt ist, enthaltend:
ein mit anionischen Gruppen modifiziertes Polyvinylalkoholharz, einen Weichmacher, der Glycerin und Sorbit in einem Massenverhältnis von 1 : 2,1 bis 5,3 enthält, und ein Sulfit,
die gesamte enthaltene Menge des Glycerins und des Sorbits beträgt 21-39 Massenteile und die enthaltene Menge des Sulfits beträgt 0,1-1,9 Massenteile, bezogen auf 100 Massenteile des mit anionischen Gruppen modifizierten Polyvinylalkoholharzes.

2. Wasserlösliche Folie für Flüssigwaschmittel-Verpackungskapsel nach Anspruch 1, wobei das Sulfit Natriumsulfit ist.

3. Wasserlösliche Folie für Flüssigwaschmittel-Verpackungskapsel nach Anspruch 1 oder 2, wobei das mit anionischen Gruppen modifizierte Polyvinylalkoholharz ein mit Maleinsäure modifizierter Polyvinylalkohol ist.

4. Wasserlösliche Folie für Flüssigwaschmittel-Verpackungskapseln nach einem der Ansprüche 1 bis 3, wobei der Trübungswert nach 2-wöchiger Lagerung bei 23 °C und 33 % relativer Luftfeuchtigkeit höchstens 10,0 % beträgt.

## Revendications

1. Film hydrosoluble pour capsule d'emballage de détergent liquide, c'est-à-dire film hydrosoluble pour capsule d'emballage dans laquelle un détergent liquide est scellé, contenant :
une résine d'alcool polyvinylique modifiée par un groupe anionique, un plastifiant comprenant de la glycérine et du sorbitol dans un rapport massique de 1 : 2,1 à 5,3, et un sulfite,
la quantité totale contenue dans la glycérine et le sorbitol est de 21 à 39 parties en masse, et la quantité contenue dans le sulfite est de 0,1 à 1,9 parties en masse, par rapport à 100 parties en masse de la résine d'alcool polyvinylique modifiée par un groupe anionique.

2. Film hydrosoluble pour capsule d'emballage de détergent liquide selon la revendication 1, dans lequel le sulfite est du sulfite de sodium.

3. Film hydrosoluble pour capsule de conditionnement de détergent liquide selon la revendication 1 ou 2, dans lequel la résine d'alcool polyvinylique modifiée par un groupe anionique est un alcool polyvinylique modifié par l'acide maléique.

4. Film hydrosoluble pour capsule d'emballage de détergent liquide selon l'une des revendications 1 à 3, dans lequel une valeur de trouble après un stockage de 2 semaines à 23 °C dans des conditions d'humidité relative de 33 % est de 10,0 % au maximum.
